# EUROPÄISCHE PATENTSCHRIFT

(11) **EP 2 639 562 B1**
(45) Veröffentlichungstag und Bekanntmachung des Hinweises auf die Patenterteilung: **02.08.2017**
(21) Anmeldenummer: 13158098.7
(22) Anmeldetag: 07.03.2013
(51) Int. Cl.: G01K 1/10, G01K 1/12

(54) **Vorrichtung zur Temperaturmessung in Metallschmelzen**
Device for temperature measurement in metal melts
Dispositif destiné à la mesure de la température dans le métal en fusion

(30) Priorität: 14.03.2012 DE 102012004987
(43) Veröffentlichungstag der Anmeldung: 18.09.2013
(73) Patentinhaber: Heraeus Electro-Nite International N.V., 3530 Houthalen (BE)
(72) Erfinder: Kendall, Martin, 3520 Zonhoven (BE); Grabowy, Marek, 39-127 Bedziemysl (PL)
(74) Vertreter: Gille Hrabal

(56) Entgegenhaltungen:
- AT-B- 394 447
- US-A- 4 871 263
- US-A- 4 977 001
- US-A- 5 388 908

## Beschreibung

Die Erfindung betrifft eine Vorrichtung zur Temperaturmessung in Metallschmelzen mit einem Thermoelement, welches in einem einseitig geschlossenen keramischen Rohr angeordnet ist, und mit einem äußeren Schutzkörper, der das einseitig geschlossene Rohr unter Bildung eines Ringraumes zwischen dem einseitig geschlossenen Rohr und der inneren Oberfläche des Schutzkörpers umschließt.

Eine derartige Vorrichtung ist aus GB-A-2193375 bekannt. Hier ist beschrieben, dass das Thermoelement von einem Metallrohr, insbesondere von Molybdän umgeben ist. Das Molybdänrohr ist zusätzlich von einer oxidischen Beschichtung umgeben. Weitere derartige Vorrichtungen sind aus EP 558808B1 bekannt. Hier ist eine vorteilhafte Füllung des Ringraumes zwischen Schutzkörper und Thermoelementrohr beschrieben.

Ähnliche Vorrichtungen sind beispielsweise aus dem deutschen Gebrauchsmuster GM 74 19 633 bekannt. In der hier beschriebenen Anordnung, ist ein einseitig geschlossenes Rohr, welches ein Thermoelement umgibt, in einen Schutzkörper aus hitzebeständigem Metalloxid und Graphit eingesetzt, wobei zwischen dem einseitig geschlossenen Rohr und dem Schutzkörper ein Ringspalt gebildet ist. Das in dem einseitig geschlossenen Rohr angeordnete Thermoelement besteht für die Anwendung bei den in Metallschmelzen herrschenden hohen Temperaturen aus teuren Materialien wie Platin. Insbesondere bei kontinuierlichen Temperaturmessungen, die für eine ständige Kontrolle der Metallschmelze notwendig sind, wird das Thermoelement im Inneren der beschriebenen Anordnung nicht ausreichend geschützt, da insbesondere reaktive bzw. korrosive Gase die das Thermoelement umgebenden Hüllen durchdringen und dabei die Hüllen und das Thermoelement zerstören können. Deshalb kann ein mehrfaches Auswechseln des Thermoelementes notwendig werden. Unter dem Einfluss der hohen Temperaturen in der Metallschmelze bilden sich innerhalb des Schutzkörpers der Vorrichtung beispielsweise Siliziummonoxid und Kohlenmonoxid, die das das Thermoelement umgebende Rohr aus Aluminiumoxid durchdringen. Dabei erhöht das Kohlenmonoxid die Porosität dieses Rohres, wodurch das Rohr langsam zerstört wird. Das Siliziummonoxid reagiert mit dem Thermoelementen-Draht, so dass dieses zerstört wird und die Temperaturmessung fehlerbehaftet bzw. nicht mehr durchführbar ist.

Eine ähnliche Vorrichtung ist beispielsweise auch aus US 5388908 A bekannt, die eine Vorrichtung zur Temperaturmessung in Metallschmelzen mit einem Thermoelement offenbart, welches in einem einseitig geschlossenen keramischen Rohr angeordnet ist, wobei die heiße Lötstelle des Thermoelementes in der Nähe des geschlossenen Endes des Rohres angeordnet ist, und mit einem äußeren Schutzkörper, der das einseitig geschlossene Rohr unter Bildung eines Ringraumes zwischen dem einseitig geschlossenen Rohr und der inneren Oberfläche des Schutzkörpers umschließt, wobei der Schutzkörper im wesentlichen aus hitzebeständigem Metalloxid und Graphit besteht.

Eine ebenfalls ähnliche Vorrichtung ist beispielsweise aus US4977001A bekannt, die eine Verkleidung für einen Molybdänkörper wie beispielsweise ein Molybdänrohr offenbart, die das Molybdän vor korrosiven Hochtemperaturumgebungen schützt. Die Verkleidung enthält Oxide von Molybdän, Aluminium, Silizium und Alkalimetalle in etwa den folgenden Gewichtsprozenten des gesamten Metallgehalt: Molybdän 18-40 Prozent; Aluminium 10-25 Prozent; Silizium 25-50 Prozent; und Alkalimetalle 8-12 Prozent. Die Verkleidung kann gebildet werden, indem das Molybdänrohr bei einer Temperatur von mehr als 400 °C in Gegenwart von Sauerstoff in Kontakt mit feuerbeständigen Oxiden von Aluminium, Silizium und Alkalimetallen gebracht wird.

Eine weitere Vorrichtung der eingangs charakterisierten Art ist aus der GB-B 2 193 375 bekannt. Bei dieser Vorrichtung ist das Thermoelement von einem einseitig geschlossenen, mit Keramik beschichteten undurchlässigen Molybdänrohr umgeben, welches in dem Schutzkörper mittels einer Keramikmasse eingebettet ist. Dieses Molybdänrohr ist sehr teuer und in der Herstellung aufwendig. Um eine Zerstörung durch thermomechanische Spannungen zu vermeiden, ist das Molybdänrohr von mehreren Keramikschichten umgeben, die einen nach außen abnehmenden Gehalt an Molybdän aufweisen. Diese Schichten dienen unter anderem dazu, Temperaturgradienten längs des Molybdänrohres zu kompensieren. Diese Keramikschichten und das Molybdänrohr können allerdings ebenfalls durch reaktive Gase, wie Kohlenmonoxid oder Siliziummonoxid zerstört werden.

Die Aufgabe der vorliegenden Erfindung besteht darin, eine Temperaturmessvorrichtung zu schaffen, bei der die Lebensdauer des Thermoelementes erhöht wird.

Dieser Aufgabe wird für die eingangs charakterisierte Vorrichtung gemäß der Erfindung dadurch gelöst, dass der Schutzkörper aus einer Mischung aus 75 bis 90 Gew.-% Aluminiumoxid, 2 bis 10 Gew.-% Siliziumoxid, 7 bis 15 Gew.-% Graphit, 0,1 bis 1 Gew.-% Fe₂O₃, 0,1 bis 1 Gew.-% (K₂O + Na₂O) und 0,1 bis 1 Gew.-% MgO sowie gegebenenfalls unvermeidbaren Verunreinigungen gebildet ist. Dieses Material führt zu einer höheren Durckfestigkeit und Biegefestigkeit des Schutzkörpers, er ist korrosions- und erosionsbeständiger als entsprechende Schutzkörper aus bekannten Materialien.

Vorteilhaft ist es, dass der Ringraum im Wesentlichen mit dem Metalloxidpulver und Aluminium als sauerstoffreduzierendem Mittel gefüllt ist, wobei der Anteil des sauerstoffreduzierenden Mittels etwa 15 Gew.-% bis etwa 70 Gew.-% bezogen auf die Füllung des Ringraumes, beträgt. Dieses sauerstoffreduzierende Mittel verhindert, dass korrosive bzw. reaktive Gase, wie beispielsweise Siliziummonoxid oder Kohlenmonoxid das das Thermoelement umgebende einseitig geschlossene Rohr erreichen und dieses sowie das Thermoelement selbst zerstören. Unter Oxidation des reduzierenden Mittels werden Silizium und Kohlenstoff gebildet, die weder das Thermoelement noch das dieses umgebende Rohr angreifen.

Zweckmäßigerweise ist das sauerstoffreduzierende Mittel pulverförmig ausgebildet und mit dem Metalloxidpulver gemischt. Dadurch ist eine gleichmäßige Verteilung des sauerstoffreduzierenden Mittels in dem Ringraum möglich und eine hohe Effektivität dieses Mittels gewährleistet.

Es ist auch möglich, das sauerstoffreduzierende Mittel in Form von Stäben, die insbesondere parallel zu dem einseitig geschlossenen Rohr angeordnet sind, auszubilden. Auch eine Ausbildung des sauerstoffreduzierenden Mittels in Form von Drähten, Pellets und/oder Körnern, die in dem Metalloxid eingebettet sind, ist möglich. Eine weitere Möglichkeit, das sauerstoffreduzierende Mittel in dem Ringraum unterzubringen, besteht darin, dass dieses Mittel das Metalloxidpulver rohrförmig umfasst. Das Rohr kann geschlossene oder auch mit Durchbrüchen versehene Zylinderwände aufweisen. Auch die rohrförmige Anordnung eines Pulvers ist denkbar. Auch eine Kombination mehrerer Formen des sauerstoffreduzierenden Mittels ist möglich. Generell ist die Gestalt des reduzierenden Mittels nicht auf die genannten Formen begrenzt.

Das reduzierende Mittel soll allerdings über den gesamten Ringraum verteilt sein, um die Wirkung optimal zu gestalten. Es soll lediglich vermieden werden, dass das reduzierende Mittel das einseitig geschlossene Rohr und den Schutzkörper direkt verbindet, da eine solche Verbindung zu Wärmebrücken führen kann, die das einseitig geschlossene Rohr einer ungleichmäßigen thermomechanischen Belastung aussetzen können. Eine demgemäße Isolierung erfolgt durch das Metalloxidpulver. Zweckmäßig ist es, dass das im Ringraum angeordnete Metalloxidpulver aus einem Oxid oder einer Mischung aus mehreren Oxiden der Gruppe Aluminiumoxid, Magnesiumoxid, Zirkonoxid, Titanoxid gebildet ist. Als besonders zweckmäßig hat sich dabei die Verwendung von Aluminiumoxid erwiesen, da dieses auch sehr kostengünstig ist. Zweckmäßigerweise beträgt der Aluminiumgehalt, bezogen auf die Füllung des Ringraumes, etwa 25 Vol.-% bis 65 Vol.-%.

Vorteilhaft ist es weiterhin, dass der Schutzkörper eine Dichte des Materials von 2,8 bis 3 g/cm³ aufweist. Er kann zweckmäßigerweise eine offene Porosität von nur 10 bis 15 % aufweisen. Von Vorteil ist es desweiteren, dass die mittlere Korngröße der Mischung des Materials des Schutzkörpers kleiner als 1 mm ist. Dadurch wird die Korrosions- und Erosionsbeständigkeit beim Einsatz der Vorrichtung zum Beispiel in Stahlschmelzen erhöht.

Nachfolgend werden Ausführungsbeispiele der Erfindung anhand einer Zeichnung näher erläutert. In der Zeichnung zeigt:

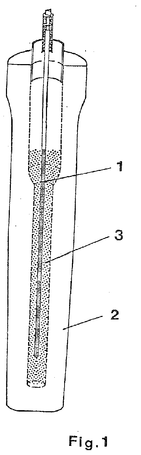

- Figur 1: die schematische Darstellung der Vorrichtung mit sauerstoffreduzierendem Pulver

Die in Figur 1 dargestellte Vorrichtung zur Temperaturmessung in Metallschmelzen weist ein Thermoelement auf, das in bekannter Weise in einem nicht dargestellten keramischen Zwillingsrohr angeordnet ist. Dieses ist von einem einseitig geschlossenen Aluminiumoxidrohr 1 umgeben. Die heiße Lötstelle des Thermoelementes befindet sich in der Nähe des geschlossenen Endes des Aluminiumoxidrohres 1, möglichst direkt an diesem Ende.

Das einseitig geschlossene Aluminiumoxidrohr 1 ist in einen Schutzkörper 2 eingesetzt, der aus hitzebeständigem Metalloxid, wie beispielsweise Aluminiumoxid und Graphit besteht. Dieser Schutzkörper 2 weist zum Einsetzen des einseitig geschlossenen Aluminiumoxidrohres 1 einen in Längsrichtung des Schutzkörpers 2 angeordneten Hohlraum auf, der an seinem dem geschlossenen Eintauchende abgewandten Ende den Schutzkörper 2 durchbricht. Durch die so entstandene Öffnung wird das Aluminiumoxidrohr 1 mit dem Thermoelement in den Schutzkörper 2 eingeführt. Der Durchmesser des Hohlraumes ist etwa 8 - 15 mm grösser als der Durchmesser des Aluminiumoxidrohres 1. Dadurch entsteht ein Ringraum 3 zwischen dem Schutzkörper und dem Thermoelementrohr.

Der Schutzkörper kann unter Verwendung einer Mischung aus 75 bis 90 Gew.-% Aluminiumoxid, das MgO und Fe₂O₃ enthält, 4 bis 10 Gew.-5 Grafit, 4 bis 10 Gew.-% Phenolharz (ein härtendes Harz) zur Festigung des Schutzkörpers und 1 bis 7 Gew.-% Silizium als Antioxidants hergestellt werden. Während des Mischens der Komponenten, nicht nur der beispielhaften Zusammensetzung, wird die Mischung getrocknet bei Temperaturen zwischen Raumtemperatur und 90°C. Danach wird die Mischung (nicht nur bei der beispielhaften Zusammensetzung) geformt und gepresst und abschließend aufgeheitzt, wobei nach einem ersten Aufheizschritt eine Glasur einer wässrigen Lösung (z.B. Borosilikat mit Na₂O und K₂O als schmelztemperatursenkende Komponenten) mit einer Schichtdicke (von z.B. etwa 0,25mm) auf die äußere Oberfläche des Schutzkörpers aufgesprüht wird. Die Glasur verhindert eine Entgasung/Entkohlung des Materials während des Brennens und während der Benutzung. Nach diesem Schritt wird bei bis zu 900°C gebrannt. Während des Prozesses reagiert das Silizium zu SiO₂ und unvermeidbare Verunreinigungen reagieren zu Fe₂O₃, K₂O, Na₂O und MgO.
Der fertige Schutzkörper weist beispielsweise etwa 82 Gew.-% Al₂O₃, etwa 6 Gew.-% SiO₂, etwa 11 Gew.-% Kohlenstoff als Grafit, etwa 0,4 Gew.-% Fe₂O₃ etwa 0,3 Gew.-% K₂O + Na₂O sowie etwa 0,3 Gew.-% MgO auf.

Das Schutzrohr wiest eine Druckfestigkeit bei Raumtemperatur von etwa 40 bis 50 Mpa, eine Biegefestigkeit bei Raumtemperatur von etwa 6 bis 9 Mpa und bei 1450 °C von 10 bis 15 Mpa auf. Seine Materialdichte beträgt etwa 2,8 bis 3 g/cm³ und seine offene Porosität beträgt etwa 10 bis 15 %. Der Schutzkörper ist aufgrund seiner Korrossions- und Erosionsbeständigkeit längerlebig als bekannte Schutzkörper und weist eine hohe Stabilität während der Verwendung in Stahlschmelze auf.

Der Ringraum 3 kann mit einer Mischung aus Aluminiumoxidpulver und Aluminiumpulver gefüllt sein, wobei der Anteil des Aluminiumpulvers an der Füllung etwa 40 - 50 Vol.-% beträgt. Das reduzierende Mittel kann auch in Form von Aluminiumstäben vorliegen, die etwa parallel zu dem Aluminiumoxidrohr 1, welches das Thermoelement beinhaltet, angeordnet sind. Diese Aluminiumstäbe sind in dem Aluminiumoxidpulver eingebettet. Es ist auch denkbar, die Aluminiumstäbe in irgendeiner anderen Weise anzuordnen, jedoch ist die Anordnung parallel zu dem Aluminiumoxidrohr 1 am effektivsten hinsichtlich der reduzierenden Wirkung. Auch eine Anordnung des reduzierenden Mittels in Form von Drähten oder Pellets bzw. Körnern in dem Aluminiumoxidpulver oder als um das Aluminiumoxidpulver herum angeordnetes Aluminiumrohr ist möglich.

Bei Erwärmung der Vorrichtung in der Metallschmelze, wie beispielsweise in einer Stahlschmelze, schmilzt das sauerstoffreduzierende Aluminium. Ein Herablaufen der Aluminiumschmelze in die geschlossene Spitze des Schutzkörpers 2 wird jedoch dadurch verhindert, dass diese Aluminiumschmelze sofort in die von dem Aluminiumoxidpulver gebildeten Hohlräume eindringt und dadurch an der Abwärtsbewegung gehindert wird.

## Patentansprüche

1. Vorrichtung zur Temperaturmessung in Metallschmelzen mit einem Thermoelement, welches in einem einseitig geschlossenen keramischen Rohr (1) angeordnet ist, und mit einem äußeren Schutzkörper (2), der das einseitig geschlossene Rohr (1) unter Bildung eines Ringraumes (3) zwischen dem einseitig geschlossenen Rohr (1) und der inneren Oberfläche des Schutzkörpers (2) umschließt, **dadurch gekennzeichnet, dass** der Schutzkörper (2) aus einer Mischung aus 75 bis 90 Gew.-% Aluminiumoxid, 2 bis 10 Gew.-% Siliziumoxid, 7 bis 15 Gew.-% Graphit, 0,1 bis 1 Gew.-% Fe₂O₃, 0,1 bis 1 Gew.-% (K₂O + Na₂O) und 0,1 bis 1 Gew.-% MgO gebildet ist.

2. Vorrichtung nach Anspruch 1, **dadurch gekennzeichnet, dass** der Ringraum (3) im Wesentlichen mit dem Metalloxidpulver und Aluminium als sauerstoffreduzierendem Mittel gefüllt ist, wobei der Anteil des sauerstoffreduzierenden Mittels etwa 15 Gew.-% bis etwa 70 Gew.-% bezogen auf die Füllung des Ringraumes (3), beträgt.

3. Vorrichtung zur Temperaturmessung nach Anspruch 2, **dadurch gekennzeichnet, dass** das sauerstoffreduzierende Mittel eine pulverige Form aufweist und mit dem Metalloxidpulver gemischt ist.

4. Vorrichtung zur Temperaturmessung nach Anspruch 2 oder 3, **dadurch gekennzeichnet, dass** das Metalloxidpulver aus einem Oxid oder einer Mischung aus mehreren Oxiden der Gruppe Aluminiumoxid, Magnesiumoxid, Zirkonoxid, Titanoxid gebildet ist.

5. Vorrichtung zur Temperaturmessung nach Anspruch 4, **dadurch gekennzeichnet, dass** das Metalloxidpulver im Wesentlichen aus Aluminiumoxid gebildet ist.

6. Vorrichtung nach einem der Ansprüche 1 bis 5, **dadurch gekennzeichnet, dass** der Schutzkörper (2) eine Dichte von 2,8 bis 3 g/cm³ aufweist.

7. Vorrichtung nach einem der Ansprüche 1 bis 6, **dadurch gekennzeichnet, dass** der Schutzkörper (2) eine offene Porosität von 10 bis 15 % aufweist.

8. Vorrichtung nach einem der Ansprüche 1 bis 7, **dadurch gekennzeichnet, dass** die mittlere Korngröße der Mischung des Materials des Schutzkörpers (2) kleiner als 1 mm ist.

## Claims

1. Device for measuring the temperature in molten metal comprising a thermocouple arranged in a ceramic tube (1) that is closed on one side, and comprising an external protection body (2) that surrounds the tube (1) that is closed on one side to form an annular space (3) between the tube (1) that is closed on one side and the inner surface of the protection body (2), **characterised in that** the protection body (2) is formed from a mixture of 75 to 90% by weight aluminium oxide, 2 to 10% by weight silicon oxide, 7 to 15% by weight graphite, 0.1 to 1% by weight Fe₂O₃, 0.1 to 1% by weight (K₂O + Na₂O) and 0.1 to 1% by weight MgO.

2. Device according to claim 1, **characterised in that** the annular space (3) is essentially filled with the metal oxide powder and aluminium as oxygen-reducing agent, whereby the fraction of the oxygen-reducing agent is approximately 15% by weight to approximately 70% by weight, relative to the filling of the annular space (3).

3. Device for measuring the temperature according to claim 2, **characterised in that** the oxygen-reducing agent is present in the form of a powder and is mixed with the metal oxide powder.

4. Device for measuring the temperature according to claim 2 or 3, **characterised in that** the metal oxide powder is formed from an oxide or a mixture of multiple oxides from the group of aluminium oxide, magnesium oxide, zirconium oxide, titanium oxide.

5. Device for measuring the temperature according to claim 4, **characterised in that** the metal oxide powder is essentially formed from aluminium oxide.

6. Device according to any one of the claims 1 to 5, **characterised in that** the protection body (2) has a density ranging from 2.8 to 3 g/cm³.

7. Device according to any one of the claims 1 to 6, **characterised in that** the protection body (2) has an open porosity ranging from 10 to 15%.

8. Device according to any one of the claims 1 to 7, **characterised in that** the mean grain size of the mixture of the material of the protection body (2) is less than 1 mm.

## Revendications

1. Dispositif destiné à la mesure de la température dans des métaux en fusion avec un thermoélément agencé dans un tube en céramique (1) clos d'un côté et avec un corps de protection extérieur (2), qui entoure le tube (1) clos d'un côté en formant un espace annulaire (3) entre le tube (1) clos d'un côté et la surface intérieure du corps de protection (2), **caractérisé en ce, que** le corps de protection (2) est constitué d'un mélange de 75 à 90 % poids d'oxyde d'aluminium, 2 à 10 % poids d'oxyde de silicium, 7 à 15 % poids de graphite, 0,1 à 1 % poids de Fe₂O₃, 0,1 à 1 % poids de (K₂O + Na₂O) et 0,1 à 1 % poids de MgO.

2. Dispositif selon la revendication 1, **caractérisé en ce, que** l'espace annulaire (3) soit essentiellement rempli de la poudre d'oxyde métallique et d'aluminium en tant qu'agent réducteur de l'oxygène, la proportion de l'agent réducteur de l'oxygène correspondant à environ 15 % poids à environ 70 % poids, rapporté au remplissage de l'espace annulaire (3).

3. Dispositif destiné à la mesure de la température selon la revendication 2, **caractérisé en ce, que** l'agent réducteur de l'oxygène présente une forme pulvérulente et qu'il est mélangé à la poudre d'oxyde métallique.

4. Dispositif destiné à la mesure de la température selon la revendication 2 ou 3, **caractérisé en ce, que** la poudre d'oxyde métallique soit formée d'un oxyde ou d'un mélange de plusieurs oxydes du groupe oxyde d'aluminium, oxyde de magnésium, oxyde de zirconium, oxyde de titane.

5. Dispositif destiné à la mesure de la température selon la revendication 4, **caractérisé en ce, que** la poudre d'oxyde métallique soit essentiellement constituée d'oxyde d'aluminium.

6. Dispositif selon l'une des revendications 1 à 5, **caractérisé en ce, que** le corps de protection (2) présente une densité de 2,8 à 3 g/cm³.

7. Dispositif selon l'une des revendications 1 à 6, **caractérisé en ce, que** le corps de protection (2) présente une porosité ouverte de 10 à 15 %.

8. Dispositif selon l'une des revendications 1 à 7, **caractérisé en ce, que** la taille particulaire moyenne du mélange du matériau du corps de protection (2) soit inférieure à 1 mm.
